# EUROPÄISCHE PATENTSCHRIFT

(11) **EP 1 281 888 B1**
(45) Veröffentlichungstag und Bekanntmachung des Hinweises auf die Patenterteilung: **03.05.2006**
(21) Anmeldenummer: 02014609.8
(22) Anmeldetag: 02.07.2002
(51) Int. Cl.: F16F 9/516, F16F 9/44

(54) **Hydraulischer Stossdämpfer**
Hydraulic shock absorber
Amortisseur hydraulique

(30) Priorität: 04.08.2001 DE 10138487
(43) Veröffentlichungstag der Anmeldung: 05.02.2003
(73) Patentinhaber: ThyssenKrupp Bilstein Suspension GmbH, 58256 Ennepetal (DE)
(72) Erfinder: Hönig, Michael, 58256 Ennepetal (DE); Wirtz, Walter, Dipl.-Ing., 58285 Gevelsberg (DE); Di Fina, Marcello, Dipl.-Ing., 44791 Bochum (DE)
(74) Vertreter: Adams, Steffen

(56) Entgegenhaltungen:
- DE-A- 3 608 738
- DE-A- 4 107 600
- DE-A- 19 808 698
- FR-A- 2 702 529
- US-A- 5 193 655

## Beschreibung

Die Erfindung betrifft einen hydraulischen Stoßdämpfer nach dem Oberbegriff des Anspruchs 1.

Hydraulische Stoßdämpfer werden zur Dämpfung der Bewegung von über Federn angelenkten Radaufhängungen vorzugsweise bei Kraftfahrzeugen eingesetzt.

Dabei erfolgt die Dämpfung durch das Durchpressen von Dämpfungsflüssigkeit durch vorzugsweise federbelastete Durchtritte im Arbeitskolben von einem Arbeitsraum in einen anderen Arbeitsraum des mit Dämpfungsflüssigkeit gefüllten Stoßdämpferrohres.

Um eine definierte verringerte Dämpfung bei kleinen Kolbengeschwindigkeiten zu erzielen, ist es bekannt, hydraulisch parallel zu den Durchbrüchen im Arbeitskolben Bypassöffnungen vorzusehen, die die beiden Arbeitsräume hydraulisch miteinander verbinden. Es ist weiterhin bekannt, den Querschnitt der Durchtrittsöffnungen des Bypasses einstellbar zu gestalten.

Die EP 1 006 292 A1 zeigt einen derartigen Stoßdämpfer. Der Bypass, der die Arbeitsräume verbindet, ist in einer axialen Bohrung der Kolbenstange angeordnet und mit seitlichen Auslässen durch die Kolbenstange versehen, die die Verbindung zu den beiden Arbeitsräumen bilden. Über eine Stellstange in der hohlen Kolbenstange ist der Bypassquerschnitt verstellbar ausgebildet. Die Stellstange wirkt auf ein als Nadelventil ausgebildetes Stellventil. Nachteilig bei dieser Ausbildung kann nur ein fester Bypassquerschnitt eingestellt werden. Das bedeutet, dass der Bypass eine gleich bleibende Öffnung sowohl für die Strömung in Zugrichtung der Kolbenstange als auch für die Strömung in Druckrichtung der Kolbenstange aufweist.

Bekannt ist, den Bypass entweder für die Strömung in Zugrichtung oder für die Strömung in Druckrichtung zu sperren. Dadurch kann nachteilig jedoch nur die Strömung in einer Bewegungsrichtung eingestellt werden.

Der Erfindung liegt die Aufgabe zugrunde, diesen Nachteil zu beheben.

Aus der DE 36 08 738 A1 ist ein hydraulischer Stoßdämpfer mit einer Bypasseinrichtung bekannt, der die Merkmale des Oberbegriffs des Patentanspruchs 1 aufweist. Die darin beschriebenen verstellbaren Bypasseinrichtungen sind als Drehschieber ausgebildet.

Die der Erfindung zugrunde liegende Aufgabe wird erfindungsgemäß mit den Merkmalen des Patentanspruchs 1 gelöst. Vorteilhafte Aus- und Weiterbildungen sind in den Ansprüchen 2 bis 4 beschrieben.

Die mit der Erfindung erzielten Vorteile bestehen insbesondere darin, dass in einfacher Weise ein unterschiedlicher Bypassquerschnitt für die Strömung in Zugrichtung und für die Strömung in Druckrichtung unabhängig voneinander fest einstellbar ist.

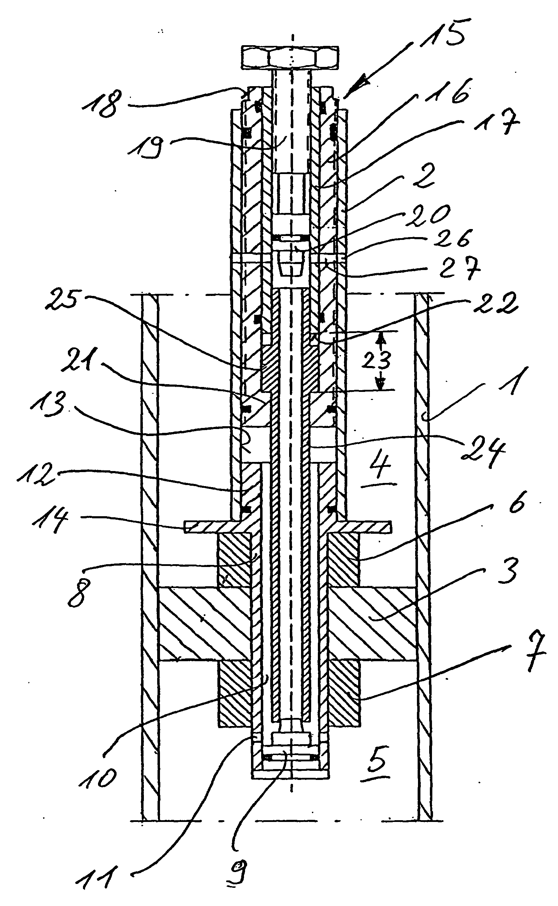

Ein Ausführungsbeispiel der Erfindung ist in der Zeichnung dargestellt und wird im Folgenden näher beschrieben. Die einzige Zeichnung zeigt einen Schnitt durch den Kolbenbereich des Stoßdämpfers.

Der Stoßdämpfer weist ein Stoßdämpferrohr 1 auf, das mit Dämpfungsflüssigkeit gefüllt ist. Eine Kolbenstange 2, an dessen Ende ein Arbeitskolben 3 angebunden ist, taucht oszillierend in das Stoßdämpferrohr 1 ein. Der Arbeitskolben 3 ist mit nicht dargestellten Durchbrüchen und Dämpfungsventilen versehen. Er trennt den Innenraum des Stoßdämpfers in zwei Arbeitsräume 4, 5.

Die Strömung der Dämpfungsflüssigkeit in Zugrichtung der Kolbenstange erfolgt durch den Arbeitskolben 3 vom oberen Arbeitsraum 4 in den unteren Arbeitsraum 5 und wird hierbei durch die Durchbrüche und Dämpfungsventile gebremst. In umgekehrter Weise durchströmt die Dämpfungsflüssigkeit den Arbeitskolben 3 in Druckrichtung der Kolbenstange vom unteren Arbeitsraum 5 in den oberen Arbeitsraum 4.

Befestigungselemente 6, 7, wie Scheiben und Muttern, dienen zum Befestigen des Arbeitskolbens 3 an der Kolbenstange 2, die zu diesem Zweck an seiner Außenseite mit einem nicht dargestellten Gewinde versehen ist.

Zum Einbau der Bypasseinrichtung ist die Kolbenstange 2 mit einer axialen, im Ausführungsbeispiel zentralen Bohrung ausgebildet. Im Ausführungsbeispiel ist das untere Ende der Kolbenstange 2 zweiteilig mit einem Verlängerungsteil 8 ausgebildet. Am unteren eintauchenden Ende dieses zur Kolbenstange 2 gehörenden Verlängerungsteils ist ein Ventilkörper 9 fest eingebaut. Dieser Ventilkörper 9 entspricht in der Funktion einem Nadelventil. Der Ventilkörper 9 verschließt die zentrale Bohrung 10 des Verlängerungsteils. Oberhalb des Ventilkörpers 9 sind radiale Öffnungen (11) durch den Mantel des Verlängerungsteils angebracht, die eine Verbindung zwischen zentraler Bohrung 10 des Verlängerungsteils 8 und unterem Arbeitsraum 5 bilden. Das Verlängerungsteil 8 greift mit einem oberen Bund 12 in die zentrale Bohrung 13 der Kolbenstange 2 ein und ist fest mit dieser verbunden. Sie stützt sich von unten über einen radialen Bund 14 gegen das Ende der Kolbenstange 2 ab.

Der obere Bereich der Kolbenstange 2 weist ein Innengewinde auf. In dieses Innengewinde ist ein zweiteilig ausgebildetes Stellrohr 15 einschraubbar. Das Stellrohr 15 besteht montagebedingt aus einem Außenrohr 16 und einem Innenrohr 17. Außenrohr 16 und Innenrohr 17 sind nach der Montage der Bypasseinrichtung fest miteinander verbunden. Das Stellrohr 15 ist an seinem oberen Ende mit einer Stelleinrichtung, beispielsweise, wie dargestellt, mit Schlüsselflächen 18 ausgebildet.

Das obere Ende der Innenbohrung des Innenrohrs 17 und damit des Stellrohrs 15 weist ein Innengewinde auf. In dieses Innengewinde greift eine Stellschraube 19 ein, die an ihrem Ende einen weiteren Ventilkörper 20 trägt. Das Außenrohr 16 des Stellrohrs 15 weist an seinem unteren Ende einen nach innen gerichteten Kragen 21 auf. Zwischen dem unteren Ende 22 des Innenrohres 17 und dem Kragen 21 ergibt sich ein Abstand 23 mit einem entsprechend größeren Durchmesser. Ein Steuerrohr 24 wird im Innendurchmesser des Innenrohres 17 und im Innendurchmesser des Kragens 21 am Außenrohr 16 radial geführt. Das Steuerrohr 24 weist einen nach außen gerichteten Bund 25 auf. Der Bund 25 hat eine geringere Länge als der Abstand 23. Somit ist das Steuerrohr 24 begrenzt axial beweglich.

Das Stellrohr 15 und die Kolbenstange 2 weisen in gleicher Höhe Durchbrüche 26, 27 auf, die unterhalb der tiefsten Stellung des an der Stellschraube 19 angeordneten Ventilkörpers 20 liegen. Diese Durchbrüche 26, 27 verbinden den Innenraum des Stellrohrs 15 mit dem Arbeitsraum 4.

Durch Verdrehen des Stellrohrs 15 bzw. der Stellschraube 19 kann nunmehr vom Ende der Kolbenstange 2 der Abstand zwischen dem jeweiligen Ventilkörper 9, 20 und dem Steuerrohr 24 eingestellt werden. Die Variation des Abstandes zwischen Steuerrohr 24 und unterem Ventilkörper 9 erfolgt durch Verdrehen des Stellrohrs 15. Der Abstand gibt sich dann aus der Begrenzung der tiefsten Lage des Steuerrohrs 24, wenn dieses mit seinem Bund 25 auf dem Kragen 21 des Außenrohrs 26 aufliegt. Mit Verdrehen des Stellrohrs 15 wird die axiale Lage des Kragens 21 des Außenrohrs 16 verstellt.

Die Durchbrüche 26, 27 durch die Kolbenstange 2 und das Stellrohr 15 sind hinsichtlich ihrer Lage und Höhe so bemessen, dass der Durchlass zwischen Innendurchmesser des Stellrohres 15 und oberem Arbeitsraum 4 stets ausreichend groß ist. Es ist auch möglich, in diesem Bereich am Außendurchmesser des Stellrohres 15 einen Ringkanal anzuordnen.

Bei der Einstellung des minimalen Abstandes zwischen Steuerrohr 24 und dem oberen der Stellschraube 19 zugehörigen Ventilkörper 20 liegt das Steuerrohr 24 mit seinem Bund 25 am unteren Ende 22 des Innenrohrs 17 an. Zur Einstellung des minimalen Abstandes zwischen Steuerrohr 24 und oberem Ventilkörper 20 ist dann die Stellschraube 19 zu verdrehen.

Damit ermöglicht die Bypasseinrichtung nach der Erfindung eine unterschiedliche Querschnittseinstellung des Bypasses in Zugrichtung oder Druckrichtung der Kolbenstange. In Zugrichtung der Kolbenstange ist der Druck im oberen Arbeitsraum 4 höher als der Druck im unteren Arbeitsraum 5. Diese Situation ist in der Figur dargestellt. Zusätzlich zur Durchströmung des Arbeitskolbens 3 durchströmt die Dämpfungsflüssigkeit den Bypass vom oberen Arbeitsraum 4 durch die Durchbrüche 26, 27 in den Innenraum des Innenrohrs 17, weiter durch das Steuerrohr 24 und dann durch den eingestellten Ringspalt zwischen Steuerrohr 24 und unterem Ventilkörper 9 durch die radiale Öffnung 11 in den unteren Arbeitsraum 5.

Bei Druckrichtung der Kolbenstange 2 ist der Druck im unteren Arbeitsraum 5 höher als im oberen Arbeitsraum 4. Die Dämpfungsflüssigkeit tritt durch die radialen Öffnungen 11 vom unteren Arbeitsraum 5 in den Innenraum des Verlängerungsteils 8 ein. Durch den Überdruck auf die ringförmige Endfläche des Steuerrohrs 24 wird dieses (im Sinne der Zeichnung) nach oben geschoben, sodass es mit seinem Bund 25 am unteren Ende 22 des Innenrohrs 17 anliegt. Damit ist ein freier Zugang für die Stoßdämpferflüssigkeit in den Innenraum des Steuerrohrs 24 erreicht. Die Dämpfungsflüssigkeit tritt dann aus diesem Innenraum durch den eingestellten Ringspalt zwischen Steuerrohr 24 und oberem Ventilkörper 20 in den Innenraum des Innenrohrs 17 ein und durch die Durchbrüche 26 und 27 in den oberen Arbeitsraum 4.

### Bezugszeichenliste

- 1.: Stoßdämpferrohr
- 2.: Kolbenstange
- 3.: Arbeitskolben
- 4.: Arbeitsraum
- 5.: Arbeitsraum
- 6.: Befestigungselement
- 7.: Befestigungselement
- 8.: Verlängerungsteil
- 9.: Ventilkörper
- 10.: Bohrung
- 11.: Öffnung
- 12.: Bund
- 13.: Bohrung
- 14.: Bund
- 15.: Stellrohr
- 16.: Außenrohr
- 17.: Innenrohr
- 18.: Schlüsselfläche
- 19.: Stellschraube
- 20.: Ventilkörper
- 21.: Kragen
- 22.: Ende
- 23.: Abstand
- 24.: Steuerrohr
- 25.: Bund
- 26.: Durchbruch
- 27.: Durchbruch

## Patentansprüche

1. Hydraulischer Stoßdämpfer mit einem mit Dämpfungsflüssigkeit gefüllten Stoßdämpferrohr (1) und einem am Ende einer oszillierend in das Stoßdämpferrohr (1) eintauchenden Kolbenstange (2) angeordneten, das Stoßdämpferrohr (1) in zwei Arbeitsräume (4, 5) teilenden, mit Durchbrüchen und Dämpfungsventilen versehenen Arbeitskolben (3) sowie einer in einer axialen Bohrung (13) der Kolbenstange (2) angeordneten, mit seitlichen Auslässen (11, 26) durch die Kolbenstange (2) versehenen einstellbaren Bypasseinrichtung, wobei der Bypassquerschnitt für die Strömung in Zugrichtung der Kolbenstange (2) und der Bypassquerschnitt für die Strömung in Druckrichtung unabhängig voneinander fest einstellbar sind, **dadurch gekennzeichnet, dass** die Bypasseinrichtung ein axial bewegliches Steuerrohr (24) aufweist, das endseitig jeweils auf einen Ventilkörper (9, 20) zufährt und dessen axialer Verschiebeweg mittels Anschlägen begrenzt ist, wobei das Steuerrohr (24) einen seitlichen Bund (25) aufweist und in einem oder mehreren weiteren Rohrelementen geführt ist, die zueinander axial verstellbar sind und Anschläge aufweisen, gegen die der Bund (25) des axial beweglichen Steuerrohres (24) fährt.

2. Hydraulischer Stoßdämpfer nach Anspruch 1, **dadurch gekennzeichnet, dass** die axiale Verstellung der Rohrelemente mittels Verdrehen von Gewinden erfolgt.

3. Hydraulischer Stoßdämpfer nach den Ansprüchen 1 bis 2, **dadurch gekennzeichnet, dass** einer der Ventilkörper (20) ebenfalls axial verstellbar ist.

4. Hydraulischer Stoßdämpfer nach Anspruch 3, **dadurch gekennzeichnet, dass** die axiale Verstellung des Ventilkörpers (20) über das Verdrehen eines Gewindes erfolgt.

## Claims

1. Hydraulic shock absorber having a shock absorber pipe (1) filled with damping fluid and a working piston (3) which is disposed on the end of a piston rod (2) being received in an oscillating manner into the shock absorber pipe (1), separates the shock absorber pipe (1) into two working chambers (4, 5) and is provided with openings and damping valves, and also having an adjustable bypass device which is disposed in an axial bore (13) of the piston rod (2) and is provided with lateral outlets (11, 26) through the piston rod (2), wherein the bypass cross-section for the flow in the traction direction of the piston rod (2) and the bypass cross-section for the flow in the compression direction can be definitively adjusted independently of one another, **characterised in that** the bypass device comprises an axially movable control pipe (24), each end of which travels towards a valve body (9, 20) and whose axial displacement path is defined by means of stops, wherein the control pipe (24) comprises a lateral collar (25) and is guided in one or several additional pipe elements which can be adjusted in an axial manner with respect to each other and comprise stops against which the collar (25) of the axially movable control pipe (24) travels.

2. Hydraulic shock absorber as claimed in Claim 1, **characterised in that** the pipe elements are axially adjusted by rotation of threads.

3. Hydraulic shock absorber as claimed in Claims 1 to 2, **characterised in that** one of the valve bodies (20) can also be axially adjusted.

4. Hydraulic shock absorber as claimed in Claim 3, **characterised in that** the valve body (20) is axially adjusted by rotation of a thread.

## Revendications

1. Amortisseur hydraulique avec un tube d'amortisseur (1) rempli d'un fluide d'amortissement et un piston de travail (3), agencé à l'extrémité d'une tige de piston (2) plongeant de manière oscillante dans le tube d'amortisseur (1), divisant la tube d'amortisseur (1) en deux chambres de travail(4, 5), pourvu de lumières et de soupapes d'amortissement, de même qu'un dispositif de dérivation ajustable, agencé dans un alésage axial (13) de la tige de piston (2), pourvu d'échappements latéraux (11, 26) traversant la tige de piston (2), la section de dérivation pour l'écoulement dans la direction de traction de la tige de piston (2) et la soupape de dérivation pour l'écoulement dans la direction de compression étant réglable de manière fixe l'une par rapport à l'autre, **caractérisé en ce que** le dispositif de dérivation présente un tube de commande (24) axialement mobile, qui conduit du côté terminal chaque fois à un corps de soupape (9, 20) et dont le déplacement axial est limité par des butées, le tube de commande (24) présentant une collerette latérale (25) et étant guidé dans un ou plusieurs autres organes tubulaires qui sont ajustable axialement l'un par rapport à l'autre et présentent des butées contre lesquelles conduit la collerette (25) du tube de commande (24) axialement mobile.

2. Amortisseur hydraulique selon la revendication 1, **caractérisé en ce que** l'ajustement axial de l'organe tubulaire résulte de la rotation de filets.

3. Amortisseur hydraulique selon les revendications 1 et 2, **caractérisé en ce que** l'un des corps de soupape (20) est également ajustable axialement.

4. Amortisseur hydraulique selon la revendication 3, **caractérisé en ce que** l'ajustement axial du corps de soupape (20) résulte de la rotation d'un filet.
